# EUROPEAN PATENT APPLICATION

(11) **EP 1 008 299 A2**
(43) Date of publication of application: **14.06.2000**
(21) Application number: 99309928.2
(22) Date of filing: 09.12.1999
(51) Int. Cl.: A21C 11/08

(54) **Moulding roller**

(30) Priority: 12.12.1998 GB 9827324
(71) Applicant: Sasib (UK) Ltd., Merseyside WA12 8DL (GB)
(72) Inventor: Hodkinson, Graham, Newton-Le-Willows, Merseyside (GB); Curd, Andrew, St. Helens, Merseyside (GB); Foote, Simon John, Rainhill, Merseyside (GB)
(74) Representative: W.P. THOMPSON & CO.

(57) **Abstract**

A moulding roller for forming biscuits, comprising one or more laminated sleeve components (33) mounted on a supporting shaft (38), each such sleeve component (33) comprising an outer layer (34) made of a material having strong wear properties, such as a copper alloy, and an inner layer (32) made of a material having a non-stick characteristic for dough, such as a polyurethane plastics material, the outer layer (34) having holes (28) through it which expose areas of the inner layer (32) on which patterns are formed which are to be embossed onto or impressed into the biscuits in use of the moulding roller.

## Description

The present invention relates to moulding rollers suitable for use in the production of biscuits and a method for the production of such rollers.

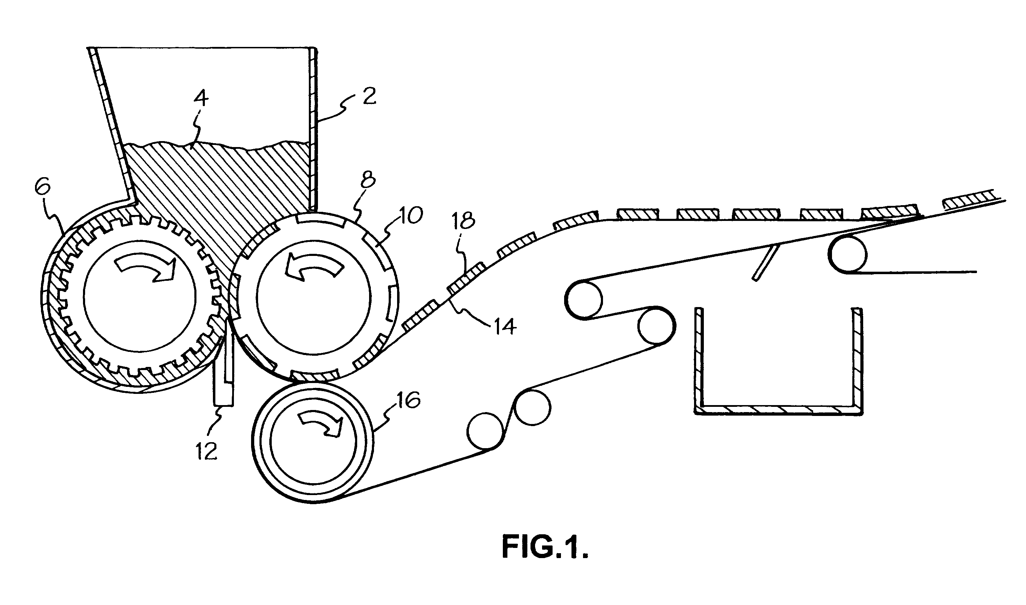

The use of moulding rollers is widespread and long-established in the commercial production of biscuits. A typical biscuit moulding apparatus is shown in Fig. 1 of the accompanying drawings. This apparatus comprises a dough hopper 2 from which dough 4 is fed between a pair of closely spaced apart cylindrical rollers 6, 8, which rotate in opposite directions. One of these rollers 6, known as the forcing roller, has a grooved surface on which a layer of dough builds up. As rollers 6, 8 rotate, the dough on the first roller is pressed into a number of recesses 10 (typically of the order of 200) in the surface of the second roller 8, which is known as the moulding roller. The inner surfaces of recesses 10 are each engraved with a brand or product name or other design which is to be embossed onto or impressed into the surface of the biscuits. Excess dough which protrudes from the recesses 10 above the surface of the moulding roller 8 is removed by a steel scraper 12 disposed tangentially with respect to the moulding roller 8.

A moving web 14 is applied to moulding roller 8 by a roller 16 and moulded dough pieces 18, deposited from the moulding roller extraction pressure onto the web 14, are carried away by web 14 for further processing, packaging, etc.

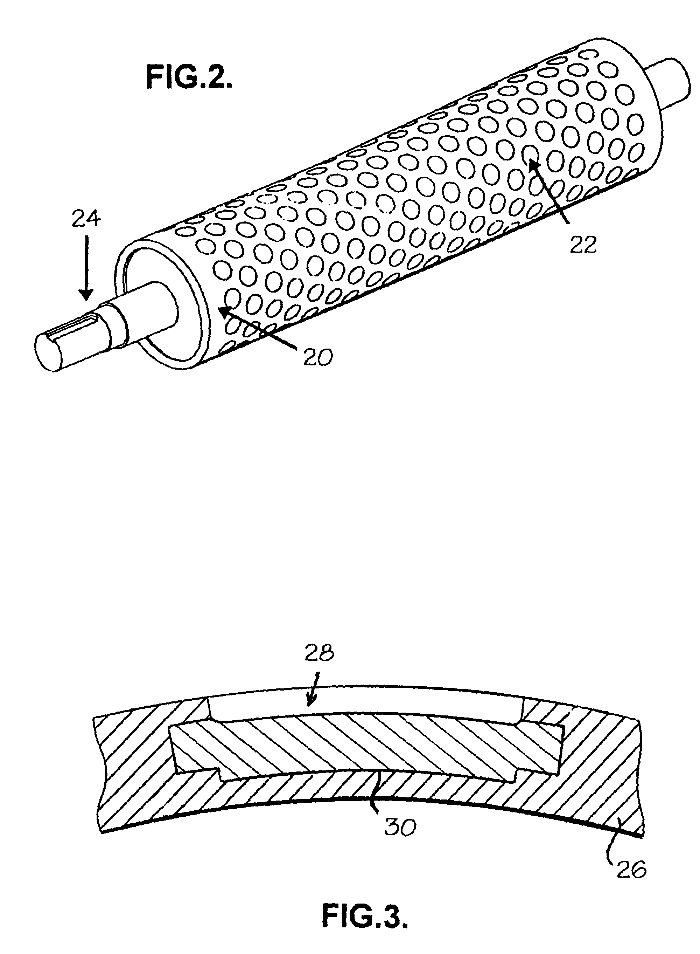

Traditionally, the moulding rollers have comprised a copper alloy sleeve 20 into which the moulding recesses 22 are engraved, mounted on a steel through-shaft, 24, as shown in Fig.2 of the attached drawings. Copper alloys, such as brass, are used for this purpose since they are safe to use in the food industry, they may be readily engraved with intricate patterns using traditional machining processes, they possess good wear properties in use with a steel scraper, and damage to recesses may be readily repaired.

Moulding rollers of this type have the disadvantage however that, when producing biscuits having intricate designs, dough is prone to stick to the inner surfaces of the recesses 10, reducing productivity. The release of dough may be aided by the application of a release coating, e.g. the coating known as "Green Xylan", to the recesses. This practice has the disadvantage that the coating wears during production and must therefore be re-applied, incurring costs for materials and downtime and, over a number of coats, eroding the definition of the engraved pattern. This type of roller is also heavy and, since manufacturers often provide rollers worldwide, incurs high freight costs.

Fig. 3 shows a detail of a second known type of roller which aims to overcome the dough release problem. The roller is produced as a copper alloy sleeve 26 which is mounted on a steel shaft (not shown). The copper alloy sleeve 26 is provided with a plurality of recesses 28 in its outer circumferential surface. In each of the recesses 28 is disposed, typically by casting, an individual insert 30 of a plastics material having good wear and dough release properties. The required design is engraved into the plastics insert 30 by traditional machining methods.

Although rollers of this type have improved dough release properties compared with all-copper alloy rollers, their production is relatively expensive and time-consuming due to the increased processing costs associated with the machining of the recesses 28 in the copper alloy sleeve 26, the casting of the plastic inserts 30 and the engraving of the design, and the time required for the increased number of stages. They are also heavy and costly to transport.

A third known type of roller is made wholly of a material having good dough release properties, e.g. polyurethane. Such rollers are light and cheap to transport, and have good dough release properties but wear quickly when used with a steel scraper.

The present invention aims to alleviate the problems associated with known moulding rollers and their production.

In accordance with a first aspect of the present invention, there is provided a moulding roller for forming biscuits, comprising one or more laminated sleeve components mounted on a supporting shaft, each such sleeve component comprising an outer layer made of a material having strong wear properties, such as a copper alloy, and an inner layer made of a material having a non-stick characteristic for dough, such as a polyurethane plastics material, the outer layer having holes through it which expose areas of the inner layer on which patterns are formed which are to be embossed onto or impressed into the biscuits in use of the moulding roller. A moulding roller according to the present invention has the advantage that is has strong wear properties where it is used with a steel scraper while having good, continuous dough release characteristics throughout its life. Such rollers can also be light and may be transported cheaply.

In accordance with a second aspect, the present invention also provides a laminated sleeve component for use in the construction of a moulding roller for forming biscuits, the sleeve component comprising an outer layer made of a material having strong wear properties and an inner layer made of a material having a non-stick characteristic for dough, the outer layer having holes through it which expose areas of the inner layer on which patterns are formed which are to be embossed onto or impressed into the biscuits in use of the moulding roller.

In accordance with a third aspect of the present invention, there is provided a method of forming a moulding roller for use in biscuit production, the method comprising forming a laminated sleeve having an outer layer made of a material having strong wear properties and an inner layer made of a material having a non-stick characteristic for dough, machining holes through the outer layer to expose areas of the inner layer, and machining a pattern on the exposed areas of the inner layer corresponding to patterns to be embossed onto or impressed into biscuits in use of the moulding roller.

Advantageously the holes in the outer layer and the forming of the patterns in the exposed areas of the inner layer are formed in a single machining operation preferably by the same machining tool.

The or a plurality of laminated sleeves are mounted side by side on a common support shaft in a number dependent on the required length of the moulding roller.

Advantageously, the laminated structure is achieved by casting the material of the inner layer between an annular ring of said material having strong wear properties and an annular former positioned therewithin.

Preferably, the inner surface of the annular ring is provided with a bonding agent prior to casting so as to enhance the bond between the inner and outer laminated layers.

The material having a non-stick characteristic for dough will normally be a plastics material. Polyurethane plastics are preferred but the invention is not limited to their use.

The material having strong wearing properties can be any suitable material but is normally a metal which is safe to use in the food industry, the preferred metal being a copper alloy such as brass.

Such a method of producing moulding rollers has the advantages that few process steps are required, reducing production time and costs; and that rollers produced by this method have the advantages hereinbefore described.

Specific embodiments will now be described, by way of example only, with reference to the accompanying drawings, in which:-
Fig. 1 illustrates a typical dough moulding stage of a biscuit production line;
Fig. 2 is a perspective view of a traditional moulding roller comprising a copper alloy sleeve with engraved recesses;
Fig. 3 is a detail of a section through a known moulding roller;
Fig. 4 is a perspective view of a roller sleeve according to the present invention; and
Fig. 5 is a perspective view of an example of a complete moulding roller built up from a plurality of the roller sleeves shown in Fig.4.

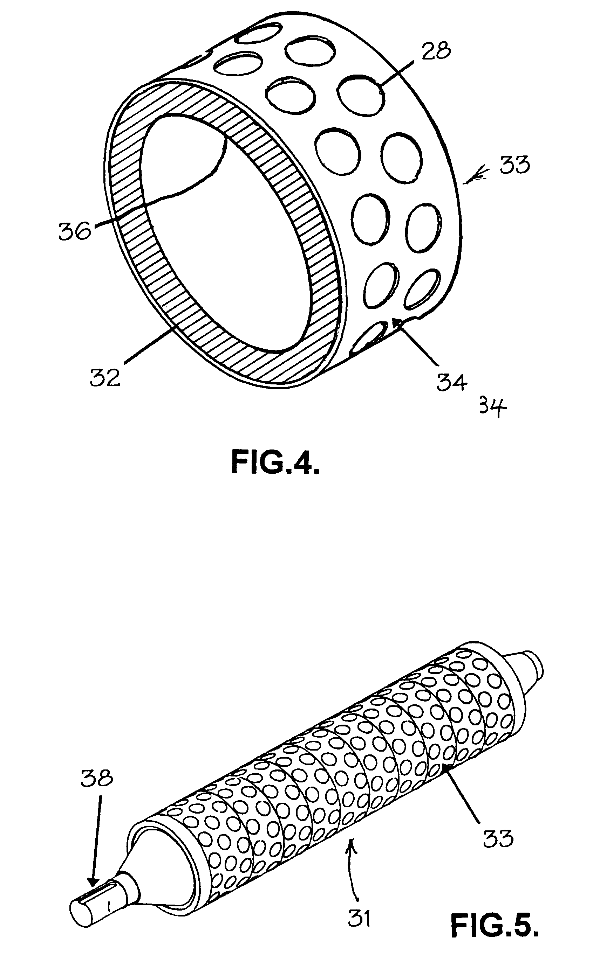

The moulding roller 31 shown in Fig. 5 is made up from a plurality of the individual laminated roller sleeves 33 shown in Fig. 4. Each roller sleeve 33 is formed by coating the inner circumference of a plain copper alloy sleeve 34 (initially having no holes) with a bonding agent, placing a smaller diameter former ring (not shown) coaxially within the sleeve 34 and casting a suitable plastics material, e.g. a polyurethane plastics material, into the annular gap between the outer copper alloy sleeve 34 and the former ring. When the plastics material has set, the former ring (which is preferably made of steel) is removed and the plastics material is turned and bored to form an inner annular plastics ring 32 within the outer copper alloy sleeve 34. The inner ring 32 has a thickness typically of around 12 mm. A keyway 36 is machined in the inner circumference of the inner ring to prevent rotation of the roller sleeve relative to a support roller in the form of a steel shaft 38, on which the roller sleeves 33 are mounted for use. Alternatively, the keyway 36 may be formed during casting of the inner ring 32 using a suitably shaped former.

The copper alloy outer sleeve 34 typically has a thickness of about 3 mm. Holes 28 (circular in this example) are machined in the outer sleeve corresponding to the biscuit size to be produced. Machining these holes 28 exposes correspondingly shaped areas of the outer circumferential surface of the inner plastics ring 32. Preferably as an extension of the same machining process, the machining tool extending through the holes 28 is used to engrave a pattern on these exposed plastics areas corresponding to a desired pattern to be embossed or impressed on the biscuits.

The roller of Fig. 5 is formed by mounting a number of such roller sleeves 33 on the common support shaft 38, preferably made of steel.

The number of roller sleeves 33 is selected in accordance with the desired production requirements but could in principle be any number from one upwards.

The individual holes 28 can be of any peripheral shape, dependent on the desired biscuit shape. The number of these holes 28 on the sleeve is again determined by production requirements in accordance with well known practices.

In use, the roller of Fig. 5 is simply substituted for the roller 8 of Fig. 1.

A roller made up from the roller sleeves 33 of Fig. 4 retains the advantages of having a copper alloy outer face, giving good wear resistance against the steel scraper 12, and engraved plastics faces in the recesses giving good product release properties, whilst being manufactured at a relatively low price that will be attractive in the market place.

The present roller also has the advantage that it is possible to replace damaged sleeves easily in service, replacement sleeves being light and therefore easily and cheaply transportable, world wide.

Usually, the copper alloy would be brass.

The plastics material is chosen such as to display the required non-stick characteristic for doughs. Polyurethane plastics are suitable for this purpose, although the invention is not limited to the use of that particular type of plastics.

## Claims

1. A laminated sleeve component (33) for use in the construction of a moulding roller for forming biscuits, the sleeve component (33) being characterised by an outer layer (34) made of a material having strong wear properties and an inner layer (32) made of a material having a non-stick characteristic for dough, the outer layer (34) having holes (28) through it which expose areas of the inner layer (32) on which patterns are formed which are to be embossed onto or impressed into the biscuits in use of the moulding roller.

2. A moulding roller for forming biscuits, characterised by one or more laminated sleeve components (33) mounted on a supporting shaft (38), each such sleeve component (33) comprising an outer layer (34) made of a material having strong wear properties and an inner layer (32) made of a material having a non-stick characteristic for dough, the outer layer (34) having holes (28) through it which expose areas of the inner layer (32) on which patterns are formed which are to be embossed onto or impressed into the biscuits in use of the moulding roller.

3. A moulding roller as claimed in claim 1 or 2, wherein the material having strong wear properties is a copper alloy.

4. A moulding roller as claimed in claim 1, 2 or 3, wherein the material having a non-stick characteristic for dough is a plastics material.

5. A method of forming a moulding roller for use in biscuit production, the method being characterised by forming a laminated sleeve (33) having an outer layer (34) made of a material having strong wear properties and an inner layer (32) made of a material having a non-stick characteristic for dough, machining holes (28) through the outer layer (34) to expose areas of the inner layer (32), and machining a pattern on the exposed areas of the inner layer corresponding to patterns to be embossed onto or impressed into biscuits in use of the moulding roller.

6. A method as claimed in claim 5, wherein the holes in the outer layer (34) and the forming of the patterns in the exposed areas of the inner layer (32) are formed in a single machining operation.

7. A method as claimed in claim 5 or 6, wherein the or a plurality of laminated sleeves are mounted side by side on a common support shaft in a number dependent on the required length of the moulding roller.

8. A method as claimed in claim 5, 6 or 7, wherein the laminated structure is achieved by casting the material of the inner layer between an annular ring of said material having strong wear properties and an annular former positioned therewithin.

9. A method as claimed in claim 8, wherein the inner surface of the annular ring is provided with a bonding agent prior to casting so as to enhance the bond between the inner and outer laminated layers (32, 34).
